# EUROPEAN PATENT SPECIFICATION

(11) **EP 3 669 723 B1**
(45) Date of publication and mention of the grant of the patent: **27.01.2021**
(21) Application number: 19217478.7
(22) Date of filing: 18.12.2019
(51) Int. Cl.: A47J 42/46

(54) **ELECTRIC COFFEE GRINDER**
ELEKTRISCHE KAFFEEMÜHLE
MOULIN À CAFÉ ÉLECTRIQUE

(30) Priority: 21.12.2018 IT 201800020734
(43) Date of publication of application: 24.06.2020
(73) Proprietor: Roger Technology S.R.L., 31021 Mogliano Veneto (TV) (IT)
(72) Inventor: FLORIAN, Dino, 31021 MOGLIANO VENETO (TREVISO) (IT)
(74) Representative: Piovesana, Paolo

(56) References cited:
- EP-A1- 3 409 155
- JP-B2- 3 023 629
- US-A1- 2009 056 554
- US-A1- 2018 049 591
- US-A1- 2018 279 831
- US-B2- 8 511 592

## Description

The present invention relates to an electric coffee grinder.

Electric coffee burrs are known comprising a coffee bean containment jar, an outlet duct for the coffee powder, and a pair of burrs, placed on the bottom of said jar and adapted to transform the coffee beans into coffee powder as they pass through these. One of the two burrs (fixed burr) has a substantially annular shape and is fixed to the structure of the appliance on the bottom of the coffee bean containment pot, while the other (rotating burr) has a substantially cylindrical or truncated cone shape, is placed coaxially inside the first one and is coupled directly on the output shaft of an electric motor or of a gearbox driven in rotation by an electric motor.

In particular, coffee burrs are known which are driven by an electric motor of various types (AC, DC, Brushless) which drive the rotating burr in rotation. These motors rotate at speeds generally between 1400 and 3000 rpm, that is, at too high speeds to be directly coupled to the rotating burr and for this reason it has been proposed to use 6/8 pole induction motors in the burrs, which can rotate. at lower speeds, up to 750 rpm and grind the coffee beans without overheating the obtained coffee powder.

In order to further reduce the rotation speed of the motor to avoid excessive heating of the coffee powder and the consequent degradation of the organoleptic characteristics of the infusion with this obtainable, it has already been proposed to associate a speed reducer to the electric motor, able to to bring the rotation speed of the burr below 750 rpm, but the speed reducer involves a considerable bulkiness, a cost and a high noise level of the coffee grinder. On the other hand, if one wanted to reduce the rotation speed of the grinder without using a speed reducer, an electric motor with a large number of poles would have to be used, but also in this case large size motors would be required, unthinkable for their use in a coffee grinder.

Moreover, since induction motors are asynchronous, the coffee burrs that use them do not ensure constant speed over time and therefore do not allow the quantity of ground coffee to be adjusted with a count of the number of revolutions of the motor but only, and very precise, with a check of the operating time of the coffee grinder.

This latter drawback has been eliminated with the replacement of the induction motor with a brushless motor, which, being of the synchronous type, allows to define the quantity of ground coffee with a control of the operating time of the coffee grinder. However, the high rotation speed of the brushless motor has made it necessary to use a speed reducer and therefore has not eliminated the drawbacks that this entails in terms of bulk, cost and noise.

Moreover, independently from the use of an induction motor or a brushless motor, in both cases the burrs are subject to wear and this involves over time a variation of the granulometry of the powder obtained and consequently an alteration of the organoleptic characteristics of the infusion obtained with this.

To avoid this inconvenience it is necessary to resort to the periodic replacement of the burrs and currently this is carried out with a programmed timing, which does not take into account the actual degree of wear of the burrs and could lead to their premature replacement, if the grinder is used little, or at their late replacement, if it is used intensively.

US 2018/0049591 describes a coffee grinder which comprises a jar containing the coffee beans and inserted in a container. The vessel walls are associated with a plurality of permanent magnets, and together they represent the rotor of an electric motor, whose stator comprises a series of turns. The electric motor is of the brushless type and is configured to rotate at a speed of about 200-400 rpm.

US 2018/0279831 describes a variable-speed coffee grinder comprising a control panel, which allows to precisely vary the rotation speed of the electric motor. In particular, the electric motor is an asynchronous three-phase motor and is configured to grind coffee at speeds below 800 rpm.

However, these solutions are not fully satisfactory since the motor, rotating at high speeds, and in the absence of speed reducers that allow to reduce the speed of the burrs, leads to overheating of the ground coffee beans. This involves the evaporation and/or sublimation of the molecules responsible for the organoleptic properties of the coffee from the ground beans, and therefore a decrease in the quality of the beverage extracted from them.

The object of the present invention is to provide a coffee grinder which eliminates all the drawbacks which, together or separately, are present in current coffee burrs.

In particular, the object of the invention is to provide a coffee grinder, in which the grinding of the coffee beans does not cause their heating and all the negative consequences that this entails.

Another object of the invention is to provide a coffee grinder which grinds coffee beans at low speed.

Another object of the invention is to provide a coffee grinder which grinds the coffee beans while keeping the granulometry of the obtained powder remarkably constant.

Another object of the invention is to provide a coffee grinder which enables the coffee beans to be ground to a predefined constant particle size.

Another object of the invention is to provide a coffee grinder that can grind the coffee beans with a predefined and constant burring speed or with a rotation speed that varies over time with a predefined trend (speed profile).

Another object of the invention is to provide a coffee grinder in which it is possible to program, also experimentally, different speed profiles of the rotating burr according to the needs of the user, the desired granulometry, the hardness and friability of the coffee beans, in the various qualities and quality in which blends are proposed on the market.

Another object of the invention is to provide a coffee grinder in which it is possible to store different speed profiles of the rotating burr, previously memorized, so as to be able to recall and use them when necessary.

Another object of the invention is to provide a coffee grinder in which it is possible to modify the speed profiles with a control unit on the machine based on signals detected by sensors and significant operating or environmental parameters such as the temperature of the coffee grinder, ambient temperature, humidity, more or less frequent use of the coffee grinder, electrical absorption, etc.

Another object of the invention is to provide a coffee grinder which allows to monitor in real time the state of wear of the burrs.

Another object of the invention is to provide a coffee grinder that is easily implemented and at low cost.

Another object of the invention is to provide a coffee grinder which allows to obtain a high quality coffee powder.

Another object of the invention is to provide a coffee grinder which is both improved and alternative to traditional and/or currently marketed coffee burrs.

Another object of the invention is to provide a coffee grinder capable of communicating with a coffee machine for an exchange of information aimed at adapting the operating parameters of the coffee grinder to the operating characteristics of the coffee machine (water temperature, water pressure, duration of delivery, etc.) so as to always obtain an infusion of coffee with the desired and strictly constant organoleptic characteristics.

According to the invention all these objects and others which will become apparent from the following description are achieved, either individually or in any combination thereof, with an electric coffee grinder having the characteristics indicated in claim 1.

The present invention is further clarified hereinafter in some its preferred embodiments which are reported by way of a non-limiting example with reference to the accompanying drawings, in which:

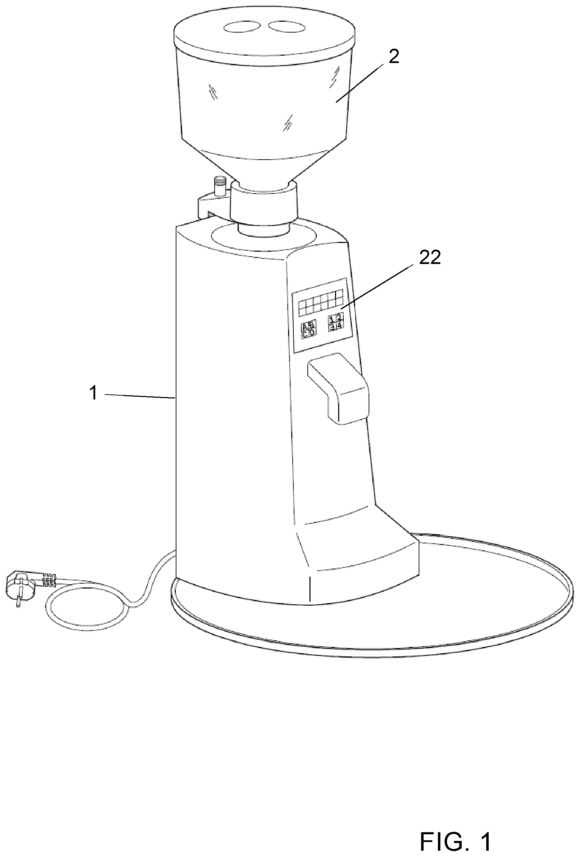

- Figure 1: shows a perspective view of the coffee grinder according to the invention,

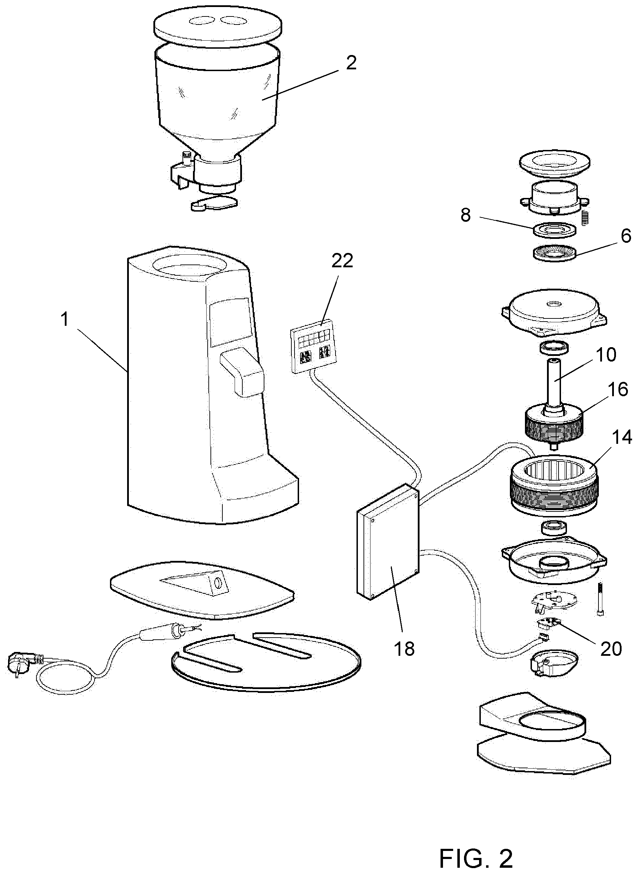

- Figure 2: shows it in an exploded perspective view, and

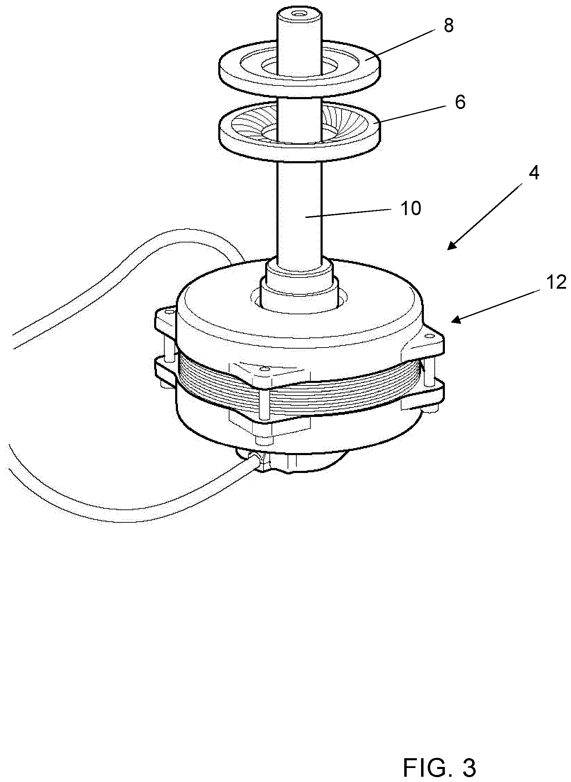

- Figure 3: shows a perspective view of the group formed by the motor and the burrs.

As can be seen from the figures, the coffee grinder according to the invention comprises a structure or base 1, on which a container 2 is arranged, preferably shaped like a vase, for containing the coffee beans to be ground, and a grinding mechanism 4. Appropriately the container 2 is open upwards so as to allow it to be filled with the coffee beans. Conveniently, the container 2 is positioned above the structure or base 1 and is supported by the latter.

Conveniently, the grinding mechanism 4 is positioned at and/or outside an opening of the container 2 through which the coffee beans contained in said container pass; preferably, said grinding mechanism 4 is placed on the bottom of said container 2.

The grinding mechanism 4 comprises a lower burr 6 and an upper burr 8; preferably, but not necessarily, the lower burr 6 is fixed while the upper burr 8 is rotating.

Conveniently, both burrs 6, 8 are shaped so as to be able to carry out, following the rotation of the rotating burr 8 with respect to the fixed burr 6, the grinding of the grains which fall or pass between the two and their transformation into powder of coffee. For example, preferably, the two burrs 6, 8 may have a truncated conical annular shape and may be affected by facing helical ribs.

A burr, preferably the lower one 6, is fixed to the structure 1 of the coffee grinder while the other burr, preferably the upper one 8, is coupled to the vertical shaft 10 of an electric motor 12.

Suitably the motor 12 is of the brushless type, comprising one stator 14 and one rotor 16. In particular, the electric motor 12 is of the synchronous type, i.e. its rotation speed is synchronized with the frequency of the electrical network to which it is connected.

Preferably, the electric motor 12 comprises a high number of poles, preferably at least about 20, in order to be able to obtain a high torque even at low rotation speeds.

Preferably, the motor 12 has a cylindrical shape, with a diameter substantially equal to or greater than its height.

Furthermore, the circular crown defining the stator 14 has a particularly small radial extension, in particular with respect to the diameter of the motor 12.

Suitably, purely by way of a non-limiting example, the motor 12 can have an external diameter of between 100 and 150mm, while the inner element (which can be the stator 14 or the rotor 16) can have a diameter for example between 80 and 120 mm. The motor 12 can be high between 30 and 60 mm.

Advantageously, the motor 12 is of the "torque" type (also called "Torque motor") and is therefore a synchronous permanent magnet brushless motor which is able to rotate at an adjustable speed, preferably between 0 and 1200 rpm, developing a constant torque, preferably between 15 and 20 Nm.

Preferably, substantially, the motor 12 is configured (both in terms of shape and size) so as to be optimized for the generation of a high torque (or strength) in output, rather than for generating a high output power.

The motor 12 comprises an external annular stator 14 and an internal rotor 16, to which the shaft 10 is directly integral. In particular, the motor 12 is connected directly to the shaft 10, without the presence/interposition of speed reducers or other gears, and therefore it is configured as a "Direct Drive" type motor. Substantially, the output of the motor 12, and in particular its rotor 16, is directly connected to the element (that is to the load) to be rotated, that is to the shaft 10 on which it is coupled.

Conveniently, the motor 12 has a continuous torque greater than 20kN/m² at the air gap (i.e. in the space between the rotor 16 and the stator 14). Suitably, the motor 12 has a loss on the copper (i.e. due to the presence of eddy currents in the stator and/or in the rotor) of less than 10kW/m² in correspondence with the air gap.

The motor 12 is suitably electrically connected to a control unit comprising a digital control unit 18 (for example implemented by a suitable electronic card and/or a microcontroller). Preferably, an encoder 20 is also provided which is associated with the motor 12 and is electrically connected to the control unit.

The control unit 18 is configured to send to the motor 12 the instructions/commands relating to its operation and, advantageously, to obtain from the encoder 20 the information relating to such operation. Conveniently, the control unit 18 is also configured to display the information relating to the operation of the motor 12 on a suitable display 22 which is advantageously applied to the structure 1 of the coffee grinder.

Conveniently, the motor 12 can be controlled by the control unit 18 on the basis of the current detected and absorbed by the motor itself or on the basis of the rotation speed detected at the output of said motor, or alternatively it can also be controlled on the basis of the couple exerted.

Suitably, the motor 12 can be controlled by current input either by rotation speed inputs or by input of exerted torque.

The encoder 20 is configured to measure/detect the operating conditions of the motor 12 and to send to the control unit 18 the information, thus measured/detected on the same. In particular, this information may comprise at least one of the following aspects: the instantaneous and/or the set rotation speed (in the case of motor control through the rotation speed input) and/or the absolute position of the rotor 16 with respect to the stator 14.

Advantageously, the control unit 18 is also configured to receive, from suitable/corresponding sensors, one or more of the following information: the instantaneous and/or the set current consumption (in case of control of the motor through the input current), any information relating to malfunctions, the temperature of the motor 12 and/or of the lower burr 6 and/or of the upper burr 8, the time passed since the last activation of the coffee grinder and/or from the last maintenance, the time of total motor operation, instantaneous and/or set applied torque (in case of motor control through torque input).

Advantageously, thanks to the particular type of motor 12 used, the noise of the coffee grinder, which in this way can also be used in environments in which this noise must be avoided, is in practice greatly reduced.

Moreover, thanks to the high efficiency of the motor 12 and to its low rotation speed, all the parts of the coffee grinder remain substantially at room temperature during operation and substantially are not subject to thermal expansions; in particular, the distance between the two burrs 6, 8 is kept substantially constant and this allows to obtain a coffee powder with constant granulometry, and therefore of high quality.

Moreover, thanks to the fact that the motor 12 is a torque motor which at the output is directly connected to the shaft on which the burr 8 is coupled and has its speed synchronized with the frequency of the supply current, and therefore strictly constant over time, it is possible to control the quantity of coffee powder produced in an equally rigorous manner with a simple control of the number of revolutions of the coffee grinder, and therefore with a parameter of easy, precise and immediate determination.

The motor 12, furthermore, thanks to its high electrical/mechanical efficiency, allows to detect even small variations of its rotation speed from small variations of the supply current and to use the latter parameter to detect and control the quantities of interest in the process of grinding. Advantageously, these small variations in the supply current of the motor 12 can be detected either by direct current measurements or by voltage measurements at the ends of small calibrated resistances (shunts) placed in series in the motor supply circuit.

Advantageously, in turn, the detection and precise control of the instantaneous current consumption allows to determine the degree of wear of the burrs. Conveniently, moreover, an indication of the instantaneous current absorbed by the motor 12 of the coffee grinder and closely correlated with the degree of wear of the burrs can be provided to the user through the display 22 of the grinder, in the sense that when the burrs are well sharpened and little worn they carry out a more intense grinding and consume less current, while when they are very worn they perform a less intense grinding and consume more current. It is clear that by measuring the current instantaneously absorbed by the motor 12 of the coffee grinder in operation it is possible to univocally determine the degree of wear of the burrs and to represent it with any symbolism on the display 22 of the coffee grinder (for example with a number or with an icon or with a graphic indication of any other nature). This makes it possible to know at any time the actual degree of wear of the burrs and therefore to provide for their replacement at the appropriate time, that is neither too early nor too late, ensuring in any case the substantial grain size consistency of the obtained coffee powder.

Moreover, advantageously, through the detection and control of the current absorbed by the motor 12 of the coffee grinder in operation it is also possible to evaluate the hardness of the coffee beans, their moisture content, their degree of roasting etc., and to relate these values with the granulometry obtained with the same parameters of regulation of the burrs, in order to be able to achieve in this way the optimal operation of the coffee grinder with any quality of coffee.

It is also advantageous that the motor 12 makes it possible to control the torque made available to the driving shaft 10 at any rotation speed within the set limits, and this makes it possible to control the quantity of ground coffee both by setting the rotation speed of the burr and the operating time of the coffee grinder, and by setting the total number of turns that the rotating burr must perform.

Preferably, in order to be able to optimally exploit the characteristics and performance of the motor 12, the display 22 can be configured to display one or more of the following operating parameters of the motor itself:
- instantaneous current absorbed by the motor 12,
- instantaneous current set for the motor 12,
- rotation speed of the torque motor 12,
- temperature of the torque motor 12,
- instantaneous torque supplied to the shaft 10 of the torque motor 12.

Advantageously, moreover, the display 22 can also be realized as a touch screen, with possibility of interventions by the operator to set and modify the parameters of interest.

From the aforegoing it is apparent that the coffee grinder according to the invention is particularly advantageous in that:
- it allows to grind coffee beans at low speed without heating them, thus avoiding altering the aroma and obtaining a powder of excellent quality,
- allows to grind the coffee beans at a controlled speed, so as to obtain a granulometry and a flow of coffee powder constant in output,
- it allows to keep under control the state of the grinding mechanism, and in particular of its burrs 6,8,
- it can be used in an industrial context thanks to the precise control on the quantity of ground coffee per unit of time,
- it can be used in environments where high noise must be avoided.

In particular, the product obtained (coffee powder) appears as a high quality product, able to develop its aroma in a homogeneous and effective way, and allows to prepare infusions of equally high quality.

## Claims

1. Electric coffee grinder comprising:
- a container (2) for containing the coffee beans to be ground,
- a grinding mechanism (4) comprising at least a pair of burrs (6,8) configured to receive and grind the coffee beans to be ground contained in said container (2), a burr (6) being fixed with respect to said container (2) and the other burr (8) being directly coupled, without the interposition of reducers and/or gears, to the output shaft (10) of a motor (12), **characterized in that** said motor is a torque motor (12) wherein said torque motor (12) is controlled by a control unit (18), said torque motor (12) being configured so as to be able to rotate at an adjustable speed between about 0 and 1200 rpm and so as to develop a substantially constant torque not exceeding 20 Nm.

2. Coffee grinder according to claim 1 **characterized in that** said motor (12) comprises at least 20 poles consisting of permanent magnets.

3. Coffee grinder according to one or more of the preceding claims, **characterized in that** said motor (12) has a substantially cylindrical shape with a diameter substantially greater than its height.

4. Coffee grinder according to one or more of the preceding claims, **characterized in that** an encoder (20) is associated with the control unit (18) of the torque motor (12) to detect the rotation speed of said torque motor (12).

5. Coffee grinder according to one or more of the preceding claims, **characterized in that** it comprises a display (22) which is associated with said control unit (18) for displaying at least one of the following operating parameters of said torque motor (12):
- instantaneous current absorbed,
- instantaneous current set,
- rotation speed of the torque motor (12),
- torque motor (12) temperature,
- instantaneous torque supplied to the shaft (10) of the torque motor (12).

6. Coffee grinder according to one or more of the preceding claims, **characterized in that** it comprises a structure (1) for containing said torque motor (12) and supporting an overlying container (2) for containing the grains of wheat to be ground.

7. Coffee grinder according to one or more of the preceding claims, **characterized in that** said torque motor (12) is arranged with the substantially vertical outlet shaft (10), to which said rotating burr (8) is fixed, cooperating with said burr (6) which is fixed to the bottom of said container (2).

8. Coffee grinder according to one or more of the preceding claims, **characterized in that** said display comprises at least one icon indicative of the condition of wear of said burrs (6,8).

9. Coffee grinder according to one or more of the preceding claims, **characterized in that** said torque motor (12) is controlled by said control unit (18) on the basis of the absorbed current and/or of the rotation speed of said motor (12) and/or of the torque exerted by said motor (12).

10. Coffee grinder according to one or more of the preceding claims, **characterized in that** it has a torque greater than 20kN/m² in the surface of the air gap.

11. Coffee grinder according to one or more of the previous claims **characterized in that** it has a loss on the copper lower than 10kW/m².

12. Coffee grinder according to one or more of the preceding claims, **characterized in that** the outgoing motor (12) is directly connected to the shaft (10) onto which said burr (8) is coupled and has its speed synchronized with the frequency of the supply current.

13. Method for detecting the wear of the burrs (6, 8) of a coffee grinder (1) according to one or more of the previous claims **characterized in that** to determine if there is wear of at least one of said burrs (6, 8) and/or to quantify the wear of said burrs (6, 8) the current absorbed by the torque motor (12) of said coffee grinder is detected and used.

14. A method for controlling the quantity of ground coffee in/by means of a coffee grinder (1) according to one or more of the preceding claims 1-12, **characterized in that** are set:
- the rotation speed of the motor (12), and therefore of the rotating burr (8), and the activation time of said motor (12), and therefore of said rotating burr (8),
- the total number of revolutions that said motor (12), and therefore said rotating burr (8), must perform.

15. Method for controlling in a coffee grinder according to one or more of the previous claims 1-12 the hardness of coffee beans, their moisture content, their degree of roasting or the grain size of the beans themselves, **characterized in that** the current absorbed by the torque motor (12) of said coffee grinder is detected and used.

## Patentansprüche

1. Elektrische Kaffeemühle, umfassend:
- einen Behälter (2) zum Beinhalten der zu mahlenden Kaffeebohnen,
- einen Mahlmechanismus (4), der mindestens ein Paar Mahlscheiben (6, 8) umfasst, die ausgelegt sind, um die in dem Behälter (2) enthaltenen, zu mahlenden Kaffeebohnen aufzunehmen und zu mahlen, wobei eine Mahlscheibe (6) in Bezug auf den Behälter (2) befestigt ist und die andere Mahlscheibe (8) ohne die Zwischenschaltung von Vorgelegen und/oder Getrieben direkt mit der Ausgangswelle (10) eines Motors (12) gekoppelt ist, **dadurch gekennzeichnet, dass** der Motor ein Torquemotor (12) ist, wobei der Torquemotor (12) durch eine Steuereinheit (18) gesteuert wird, wobei der Torquemotor (12) ausgelegt ist, um in der Lage zu sein, bei einer einstellbaren Drehzahl zwischen etwa 0 und 1200 U/min zu drehen, und um ein im Wesentlichen konstantes Drehmoment zu entwickeln, das 20 Nm nicht übersteigt.

2. Kaffeemühle nach Anspruch 1, **dadurch gekennzeichnet, dass** der Motor (12) mindestens 20 Pole umfasst, die aus Permanentmagneten bestehen.

3. Kaffeemühle nach einem oder mehreren der vorhergehenden Ansprüche, **dadurch gekennzeichnet, dass** der Motor (12) eine im Wesentlichen zylindrische Form mit einem Durchmesser, der im Wesentlichen größer als seine Höhe ist, aufweist.

4. Kaffeemühle nach einem oder mehreren der vorhergehenden Ansprüche, **dadurch gekennzeichnet, dass** ein Geber (20) mit der Steuereinheit (18) des Torquemotors (12) verbunden ist, um die Drehzahl des Torquemotors (12) zu erfassen.

5. Kaffeemühle nach einem oder mehreren der vorhergehenden Ansprüche, **dadurch gekennzeichnet, dass** sie eine Anzeige (22) umfasst, die mit der Steuereinheit (18) zum Anzeigen mindestens eines der folgenden Betriebsparameter des Torquemotors (12) verbunden ist:
- aufgenommener Momentanstrom,
- eingestellter Momentanstrom,
- Drehzahl des Torquemotors (12),
- Temperatur des Torquemotors (12),
- momentanes, an die Welle (10) des Torquemotors (12) zugeführtes Drehmoment.

6. Kaffeemühle nach einem oder mehreren der vorhergehenden Ansprüche, **dadurch gekennzeichnet, dass** sie eine Struktur (1) zum Beinhalten des Torquemotors (12) und zum Tragen eines darüberliegenden Behälters (2) zum Beinhalten der zu mahlenden Weizenkörner umfasst.

7. Kaffeemühle nach einem oder mehreren der vorhergehenden Ansprüche, **dadurch gekennzeichnet, dass** der Torquemotor (12) so angeordnet ist, dass die im Wesentlichen vertikale Ausgangswelle (10), an der die drehende Mahlscheibe (8) befestigt ist, mit der Mahlscheibe (6) zusammenwirkt, die am Boden des Behälters (2) befestigt ist.

8. Kaffeemühle nach einem oder mehreren der vorhergehenden Ansprüche, **dadurch gekennzeichnet, dass** die Anzeige mindestens ein Symbol umfasst, das den Verschleißzustand der Mahlscheiben (6, 8) anzeigt.

9. Kaffeemühle nach einem oder mehreren der vorhergehenden Ansprüche, **dadurch gekennzeichnet, dass** der Torquemotor (12) durch die Steuereinheit (18) auf Basis des aufgenommenen Stroms und/oder der Drehzahl des Motors (12) und/oder des durch den Motor (12) ausgegebenen Drehmoments gesteuert wird.

10. Kaffeemühle nach einem oder mehreren der vorhergehenden Ansprüche, **dadurch gekennzeichnet, dass** sie ein Drehmoment von mehr als 20 kN/m² auf der Oberfläche des Luftspalts aufweist.

11. Kaffeemühle nach einem oder mehreren der vorhergehenden Ansprüche, **dadurch gekennzeichnet, dass** sie einen Kupferverlust von weniger als 10 kW/m² aufweist.

12. Kaffeemühle nach einem oder mehreren der vorhergehenden Ansprüche, **dadurch gekennzeichnet, dass** der Ausgangsmotor (12) direkt mit der Welle (10) verbunden ist, an die die Mahlscheibe (8) gekoppelt ist, und seine Drehzahl mit der Frequenz des Versorgungsstroms synchronisiert ist.

13. Verfahren zum Erfassen des Verschleißes der Mahlscheiben (6, 8) einer Kaffeemühle (1) nach einem oder mehreren der vorhergehenden Ansprüche, **dadurch gekennzeichnet, dass** zum Bestimmen, ob Verschleiß an mindestens einer der Mahlscheiben (6, 8) aufgetreten ist, und/oder zum Quantifizieren des Verschleißes der Mahlscheiben (6, 8) der durch den Torquemotor (12) der Kaffeemühle aufgenommene Strom erfasst und verwendet wird.

14. Verfahren zum Steuern der Menge an gemahlenem Kaffee in/mittels einer Kaffeemühle (1) nach einem oder mehreren der vorhergehenden Ansprüche 1-12, **dadurch gekennzeichnet, dass** eingestellt ist:
- die Drehzahl des Motors (12) und daher der drehenden Mahlscheibe (8) und
- die Aktivierungszeit des Motors (12) und daher der drehenden Mahlscheibe (8),
- die Gesamtanzahl der Umdrehungen, die der Motor (12) und daher die drehende Mahlscheibe (8) vollziehen müssen.

15. Verfahren zum Steuern der Härte von Kaffeebohnen, deren Feuchtegehalt, deren Röstgrad oder der Korngröße der Bohnen selbst in einer Kaffeemühle nach einem oder mehreren der vorhergehenden Ansprüche 1-12, **dadurch gekennzeichnet, dass** der durch den Torquemotor (12) der Kaffeemühle aufgenommene Strom erfasst und verwendet wird.

## Revendications

1. Moulin à café électrique **caractérisé en ce qu'**il comprend:
- un récipient (2) pour contenir les grains de café à broyer,
- un mécanisme de broyage (4) comprenant au moins une paire de broies (6,8) configurées pour recevoir et moudre les grains de café à broyer contenus dans ledit récipient (2), une broie (6) étant fixée par rapport audit récipient (2) et l'autre broie (8) étant directement couplées, sans interposition de réducteurs et/ou d'engrenages, à l'arbre de sortie (10) d'un moteur (12), **caractérisé en ce que** ledit moteur est un moteur couple (12), ledit moteur couple (12) est commandé par une unité de commande (18), ledit moteur couple (12) étant configuré de manière à pouvoir tourner à une vitesse réglable entre environ 0 et 1200 tr/min et de manière à développer une valeur sensiblement constante couple ne dépassant pas 20 Nm.

2. Moulin à café selon la revendication 1 **caractérisé en ce que** ledit moteur (12) comprend au moins 20 pôles constitués d'aimants permanents.

3. Moulin à café selon une ou plusieurs des revendications précédentes, **caractérisé en ce que** ledit moteur (12) a une forme sensiblement cylindrique avec un diamètre sensiblement supérieur à sa hauteur.

4. Moulin à café selon une ou plusieurs des revendications précédentes, **caractérisé en ce qu'**un codeur (20) est associé à l'unité de commande (18) du moteur couple (12) pour détecter la vitesse de rotation dudit moteur couple (12).

5. Moulin à café selon une ou plusieurs des revendications précédentes, **caractérisé en ce qu'**il comprend un afficheur (22) qui est associé à ladite unité de commande (18) pour afficher au moins l'un des paramètres de fonctionnement suivants dudit moteur couple (12):
- courant instantané absorbé,
- courant instantané fixé,
- vitesse de rotation du moteur couple (12),
- température du moteur couple (12),
- couple instantané fourni à l'arbre (10) du moteur couple (12).

6. Moulin à café selon une ou plusieurs des revendications précédentes, **caractérisé en ce qu'**il comprend une structure (1) pour contenir ledit moteur couple (12) et supporter un récipient sus-jacent (2) pour contenir les grains de blé à broyer.

7. Moulin à café selon une ou plusieurs des revendications précédentes, **caractérisé en ce que** ledit moteur couple (12) est agencé avec l'arbre de sortie sensiblement vertical (10), auquel est fixée ladite meule rotative (8), coopérant avec ladite meule (6) qui est fixé au fond dudit récipient (2).

8. Moulin à café selon une ou plusieurs des revendications précédentes, **caractérisé en ce que** ledit afficheur comprend au moins une icône indicative de l'état d'usure desdites broies (6,8).

9. Moulin à café selon une ou plusieurs des revendications précédentes, **caractérisé en ce que** ledit moteur couple (12) est commandé par ladite unité de commande (18) sur la base du courant absorbé et/ou de la vitesse de rotation dudit moteur (12) et/ou du couple exercé par ledit moteur (12).

10. Moulin à café selon une ou plusieurs des revendications précédentes, **caractérisé en ce qu'**il présente un couple supérieur à 20kN/m² à la surface de l'entrefer.

11. Moulin à café selon une ou plusieurs des revendications précédentes **caractérisé en ce qu'**il présente une perte sur le cuivre inférieure à 10kW/m².

12. Moulin à café selon une ou plusieurs des revendications précédentes, **caractérisé en ce que** le moteur sortant (12) est directement relié à l'arbre (10) sur lequel ladite broie (8) est accouplée et a sa vitesse synchronisée avec la fréquence du courant d'alimentation.

13. Procédé de détection de l'usure des broies (6, 8) d'un moulin à café (1) selon une ou plusieurs des revendications précédentes **caractérisé en ce qu'**il faut déterminer s'il y a usure d'au moins l'une desdites broies (6, 8) et/ou pour quantifier l'usure desdites broies (6, 8), le courant absorbé par le moteur couple (12) dudit moulin à café est détecté et utilisé.

14. Procédé de contrôle de la quantité de café moulu dans/au moyen d'un moulin à café (1) selon une ou plusieurs des revendications précédentes, **caractérisé en ce que**:
- la vitesse de rotation du moteur (12), et donc de la broie tournante (8), et le temps d'activation dudit moteur (12), et donc de ladite broie tournante (8),
- le nombre total de tours que doit effectuer ledit moteur (12), et donc ladite broie tournante (8).

15. Procédé de contrôle de la dureté des grains de café, de leur teneur en humidité, de leur degré de torréfaction ou de la granulométrie des grains eux-mêmes, **caractérisé en ce que** le courant absorbé par le moteur couple (12) dudit moulin à café est détecté et utilisé.
